# EUROPEAN PATENT APPLICATION

(11) **EP 4 834 978 A1**
(43) Date of publication of application: **04.11.2026**
(21) Application number: 25912973.2
(22) Date of filing: 23.12.2025
(51) Int. Cl.: C08J 3/24, C08F 20/06, C08F 2/44, C08L 33/02

(54) **ABSORBENT RESIN AND PREPARATION METHOD THEREFOR**

(30) Priority: 23.12.2024 KR 20240193917; 22.12.2025 KR 20250206003
(71) Applicant: LG Chem, Ltd., Seoul 07336 (KR)
(72) Inventor: JEONG, Jiyoon, Seoul 07796 (KR); YANG, Seung Hun, Seoul 07796 (KR); LEE, Jin Woo, Seoul 07796 (KR)
(74) Representative: Goddar, Heinz J.
(86) International application number: PCT/KR2025/022568
(87) International publication number: WO 2026/142259

(57) **Abstract**

The present invention relates to an absorbent resin and a method for manufacturing the same, and more specifically, to an absorbent resin having a Hunter Color B of 8 or less, a centrifugal retention capacity (CRC) of 30 g/g or more as measured according to EDANA method WSP 241.2, an absorbency under pressure (AUP) at 4826 Pa (0.7 psi) of 9 g/g or more as measured according to EDANA method WSP 242.2, and a permeability of 1,000 seconds or less, and a method for manufacturing the same.

## Description

### [TECHNICAL FIELD]

The present invention relates to an absorbent resin (absorbent polymer) and a method for manufacturing the same, and more specifically, to an absorbent resin having a Hunter Color B of 8 or less, a centrifugal retention capacity (CRC) of 30 g/g or more as measured according to EDANA method WSP 241.2, an absorbency under pressure (AUP) at 4826 Pa (0.7 psi) of 9 g/g or more as measured according to EDANA method WSP 242.2, and a permeability of 1,000 seconds or less, and a method for manufacturing the same.

### [BACKGROUND ART]

Absorbent resins are synthetic polymer materials capable of absorbing water hundreds of times their own weight, and are widely used in various industries such as sanitary products, agriculture, civil engineering, construction, and food. In particular, in the field of sanitary materials such as diapers and sanitary pads, absorbent resins are used together with pulp to play a key role in efficiently absorbing and retaining liquids such as urine.

Recently, as sanitary materials such as diapers have become gradually thinner and the demand for "pulpless" products with reduced pulp content or no pulp has increased, improving the performance of absorbent resins is becoming more important. In such sanitary materials, absorbent resins are used in a high ratio, and it is essential that absorbent resin particles are included in multiple layers to efficiently absorb and retain liquid. To this end, the absorbent resin must simultaneously satisfy high absorbency and absorbency under pressure to retain absorbed water even under external pressure.

However, the centrifugal retention capacity (CRC) and absorbency under pressure (AUP) of absorbent resins have a trade-off relationship, making it difficult to improve both simultaneously. For example, lowering the crosslinking density may increase the centrifugal retention capacity (CRC) but may lower the gel strength, thereby reducing the absorbency under pressure (AUP); conversely, increasing the crosslinking density improves the absorbency under pressure (AUP) but causes a problem of reducing the centrifugal retention capacity (CRC). For this reason, conventional absorbent resin manufacturing technologies have revealed limitations in simultaneously improving centrifugal retention capacity (CRC) and absorbency under pressure (AUP).

In addition, as absorbent resins are used in large quantities in sanitary materials such as diapers, the impact of discoloration issues and residual monomer (RM) content on product quality and safety is becoming increasingly important. Discoloration negatively affects consumer confidence, and residual monomers (RM) are emerging as a critical task that must be addressed in terms of product safety and eco-friendliness.

In the prior art, sodium persulfate was used as a thermal initiator to reduce residual monomers (RM) of the absorbent resin, but this is a substance that causes the problem of impairing the color of the absorbent resin. Using sodium persulfate below a certain level improves the color of the absorbent resin but reduces the residual monomer (RM) reduction effect, whereas using sodium persulfate above a certain level allows management of residual monomers (RM) to 500 ppm or less but causes a problem of color degradation. In particular, in the field, situations frequently occur where sodium persulfate must be added in an excessive amount to manage residual monomers (RM) because the dimer concentration of acrylic acid, a main raw material of the absorbent resin, is not constant. These problems act as factors that simultaneously hinder quality stability and efficiency in the absorbent resin manufacturing process.

Against this backdrop, there is a demand for the development of innovative manufacturing technologies capable of simultaneously improving the absorption performance (CRC and AUP) and color stability of absorbent resins and minimizing residual monomers (RM).

### [PRIOR ART DOCUMENTS]

[Patent Document 1] Korean Patent Publication No. 10-2022-0088354

### [SUMMARY OF THE INVENTION]

### [TECHNICAL PROBLEM]

An object of the present invention is to provide an absorbent resin having excellent centrifugal retention capacity (CRC), absorbency under pressure (0.7 AUP), permeability, absorption rate, and color stability, while minimizing residual monomers (RM) to ensure stable quality. In particular, it was confirmed that by optimizing the components and conditions used in the polymerization and post-crosslinking processes, it is possible to manufacture an absorbent resin capable of maintaining a centrifugal retention capacity of 30 g/g or more, an absorbency under pressure of 9 g/g or more, an absorption rate of 80 seconds or less, a permeability of 1,000 seconds or less, a Hunter Color B value of 8 or less, and a low residual monomer (RM) content of 500 ppm or less.

Accordingly, an object of the present invention is to provide an absorbent resin and a method for manufacturing the same.

However, the problems to be solved by the present application are not limited to the above-mentioned problems, and other problems not mentioned will be clearly understood by those skilled in the art from the following description.

### [SOLUTION TO THE PROBLEM]

According to one aspect,
an absorbent resin satisfying the following (1) to (4) is provided:
(1) a Hunter Color B of 8 or less;
(2) a centrifugal retention capacity (CRC) of 30 g/g or more as measured according to EDANA method WSP 241.2;
(3) an absorbency under pressure (AUP) at 4826 Pa (0.7 psi) of 9 g/g or more as measured according to EDANA method WSP 242.2; and
(4) a permeability of 1,000 seconds or less.

The absorbent resin may have (5) an absorption rate by a vortex method of 80 seconds or less.

The absorbent resin may have a content of residual monomers measured according to EDANA method WSP 210.3 of 500 ppm or less based on 100 parts by weight of the absorbent resin.

The absorbent resin may satisfy the following (1) to (5):
(1) a Hunter Color B of 1 to 7;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 23 g/g as measured according to EDANA method WSP 242.2;
(4) a permeability of 50 to 800 seconds; and
(5) an absorption rate by a vortex method of 20 to 75 seconds.

The absorbent resin may satisfy the following (1) to (5):
(1) a Hunter Color B of 1 to 6.5;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 22 g/g as measured according to EDANA method WSP 242.2;
(4) a permeability of 50 to 750 seconds; and
(5) an absorption rate by a vortex method of 25 to 75 seconds.

Another aspect of the present invention provides a method for manufacturing an absorbent resin, the method comprising:
(S1) a polymerization step comprising mixing a water-soluble ethylenically unsaturated monomer having an acidic group, at least a portion of which is neutralized, with sodium persulfate and hydrogen peroxide (H₂O₂), to obtain a polymer; and
(S2) a post-crosslinking step comprising mixing the polymer obtained in the polymerization step with an epoxy-based surface crosslinking agent and a discoloration inhibitor, wherein the absorbent resin satisfying the following (1) to (4):
   (1) a Hunter Color B of 8 or less;
   (2) a centrifugal retention capacity (CRC) of 30 g/g or more as measured according to EDANA method WSP 241.2;
   (3) an absorbency under pressure (AUP) at 4826 Pa (0.7 psi) of 9 g/g or more as measured according to EDANA method WSP 242.2; and
   (4) a permeability of 1,000 seconds or less.

In the step (S1), an amount of the sodium persulfate added may be 1,000 to 2,500 ppm based on 100 parts by weight of the water-soluble ethylenically unsaturated monomer.

In the step (S1), an amount of the hydrogen peroxide added may be 100 ppm or more to less than 500 ppm based on 100 parts by weight of the water-soluble ethylenically unsaturated monomer.

In the step (S2), an amount of the surface crosslinking agent added may be 0.01 to 0.30 parts by weight based on 100 parts by weight of the polymer obtained in the step (S1).

In the step (S2), an amount of the discoloration inhibitor added may be 0.01 parts by weight or more to less than 0.1 parts by weight based on 100 parts by weight of the polymer obtained in the step (S1).

In the step (S2), the post-crosslinking step may be performed at a temperature of 150°C or lower.

### [ADVANTAGEOUS EFFECTS]

The absorbent resin according to the present invention may provide the following effects.

The absorbent resin of the present invention exhibits a centrifugal retention capacity (CRC) of 30 g/g or more and an absorbency under pressure (0.7 AUP) of 9 g/g or more, thereby securing superior absorption performance compared to conventional resins.

The absorbent resin of the present invention has an absorption rate of 80 seconds or less and maintains a permeability of 1,000 seconds or less, thereby providing appropriate liquid absorption and permeability capabilities in actual use environments.

The absorbent resin according to the present invention maintains a Hunter Color B value of 8 or less, allowing the absorbent resin to preserve an excellent appearance without discoloration.

The absorbent resin according to the present invention maintains a residual monomer (RM) content of 500 ppm or less, thereby securing product stability and satisfying conditions suitable for use in sanitary materials.

Therefore, the present invention has high potential for application in various industrial fields by providing an absorbent resin that simultaneously satisfies high performance and color stability and has stable quality.

Meanwhile, the scope of the present invention is not limited by the effects described above.

### [DETAILED DESCRIPTION OF THE INVENTION]

Hereinafter, the present invention will be described in more detail.

Unless otherwise defined, all terms (including technical and scientific terms) used herein have the same meaning as commonly understood by one of ordinary skill in the art to which the present invention belongs. Also, terms such as those defined in commonly used dictionaries are not to be interpreted in an idealized or overly formal sense unless expressly so defined herein.

Throughout this specification, when a part is referred to as "including" a component, it should be understood as an open-ended term implying the possibility of further including other components, rather than excluding other components, unless otherwise stated.

In addition, the terms "preferred" and "preferably" as used herein refer to embodiments of the present invention that can provide certain advantages under certain circumstances. However, other embodiments may also be preferred under the same or different circumstances. Additionally, the mention of one or more preferred embodiments does not imply that other embodiments are not useful, nor is it intended to exclude other embodiments from the scope of the present invention.

Terms such as first, second, and third are used to describe various components, and these terms are used only for the purpose of distinguishing one component from another.

The term "polymer" or "macromolecule" as used herein refers to a state in which a water-soluble ethylenically unsaturated monomer is polymerized, and may encompass any moisture content range or particle size range. Among the above polymers, a polymer having a water content (moisture content) of about 35% by weight or more in a state after polymerization and before drying may be referred to as a "hydrogel polymer," and particles obtained by pulverizing and drying such a hydrogel polymer may be referred to as a "crosslinked polymer."

The term "base resin" or "base resin powder" as used herein refers to a polymer obtained by polymerizing an acrylic acid-based monomer, which is dried and pulverized into a particle or powder form, and refers to a polymer that has not undergone a surface modification or surface crosslinking step to be described later.

The term "absorbent resin" or "absorbent resin powder" as used herein refers to a crosslinked polymer in which a water-soluble ethylenically unsaturated monomer (acrylic acid-based monomer) having an acidic group and at least a portion of the acidic group neutralized is polymerized, or a base resin in the form of a powder consisting of pulverized absorbent resin particles of the crosslinked polymer, or is used to encompass all forms that have undergone additional processes such as surface crosslinking, fines reassembly, drying, pulverization, classification, etc., on the crosslinked polymer or the base resin to be in a state suitable for commercialization, depending on the context.

Since the present invention can be modified in various ways and have various forms, specific embodiments will be illustrated and described in detail below. However, this is not intended to limit the present invention to specific disclosed forms, and should be understood to include all modifications, equivalents, or substitutes included in the spirit and technical scope of the present invention.

Hereinafter, an absorbent resin having high performance and color stability and a method for manufacturing the same according to specific aspects of the invention will be described in more detail.

### 1. Absorbent Resin

An aspect of the present invention
provides an absorbent resin satisfying the following (1) to (4):
(1) a Hunter Color B of 8 or less;
(2) a centrifugal retention capacity (CRC) of 30 g/g or more as measured according to EDANA method WSP 241.2;
(3) an absorbency under pressure (AUP) at 4826 Pa (0.7 psi) of 9 g/g or more as measured according to EDANA method WSP 242.2; and
(4) a permeability of 1,000 seconds or less.

The Hunter Color B of the absorbent resin may be 8 or less. Specifically, the Hunter Color B of the absorbent resin may be 8 or less, 7.9 or less, 7.8 or less, 7.7 or less, 7.6 or less, 7.5 or less, 7.4 or less, 7.3 or less, 7.2 or less, 7.1 or less, 7.0 or less, 6.9 or less, 6.8 or less, 6.7 or less, 6.6 or less, 6.5 or less, 6.4 or less, 6.3 or less, or 6.2 or less. The lower limit of the Hunter Color B of the absorbent resin is not particularly limited, but may typically be 1 or more. For example, the Hunter Color B of the absorbent resin may be 1 to 8, 1 to 7.9, 1 to 7.8, 1 to 7.7, 1 to 7.6, 1 to 7.5, 1 to 7.4, 1 to 7.3, 1 to 7.2, 1 to 7.1, 1 to 7.0, 1 to 6.9, 1 to 6.8, 1 to 6.7, 1 to 6.6, 1 to 6.5, 1 to 6.4, 1 to 6.3, or 1 to 6.2. If the value of the Hunter Color B of the absorbent resin exceeds 8, it appears yellow to yellowish-brown even to the naked eye, suggesting the presence of residual impurities or the possibility of oxidation, which may lead to degradation in absorption performance and storage stability problems. The Hunter Color B can be measured using a colorimeter (Color Quest II, Hunter Lab Co.).

The centrifugal retention capacity (CRC) of the absorbent resin may be 30 g/g or more. Specifically, the centrifugal retention capacity of the absorbent resin may be 30 to 50 g/g, 30 to 49 g/g, 30 to 48 g/g, 30 to 47 g/g, 30 to 46 g/g, or 30 to 45 g/g. The centrifugal retention capacity can be measured according to the method of EDANA method WSP 241.2.

The absorbency under pressure (AUP) of the absorbent resin may be 9 g/g or more. Specifically, the absorbency under pressure of the absorbent resin may be 9 to 25 g/g, 9 to 24 g/g, 9 to 23 g/g, or 9.5 to 22 g/g. The absorbency under pressure can be measured according to the method of EDANA method WSP 242.2.

The permeability of the absorbent resin may be 1,000 seconds or less. Specifically, the permeability of the absorbent resin may be 50 to 1,000 seconds, 50 to 900 seconds, 50 to 800 seconds, 50 to 750 seconds, or 50 to 700 seconds. If the permeability of the absorbent resin exceeds 1,000 seconds, the absorption process proceeds inefficiently due to the slow diffusion of the liquid, which may cause discomfort to a user due to a lingering wet feeling. The permeability can be measured by T1 - B, where T1 is the time required for the liquid level to decrease from 40 ml to 20 ml after placing 0.2±0.0005 g of an absorbent resin sample classified (30# to 50#) into a chromatography tube with an inner diameter of 20 mm equipped with a glass filter at the bottom, adding 0.9% saline solution to make the saline volume 50 ml, and leaving it for 30 minutes; and B is the time required for the liquid level to decrease from 40 ml to 20 ml in a chromatography tube filled with saline.

The absorbent resin may have an absorption rate by a vortex method of 80 seconds or less. Specifically, the absorption rate of the absorbent resin by the vortex method may be 20 to 80 seconds, 20 to 79 seconds, 20 to 78 seconds, 20 to 77 seconds, 20 to 76 seconds, 20 to 75 seconds, 21 to 75 seconds, 22 to 75 seconds, 23 to 75 seconds, 24 to 75 seconds, or 25 to 75 seconds. If the absorption rate of the absorbent resin by the vortex method exceeds 80 seconds, moisture is not efficiently absorbed under external pressure, which causes a problem of reduced absorption efficiency and degraded product performance. The absorption rate by the vortex method can be calculated by adding 2 g of absorbent resin to 50 mL of physiological saline at 23°C to 24°C, stirring at 600 rpm, and measuring the time in seconds until the vortex disappears.

The content of residual monomers of the absorbent resin measured according to EDANA method WSP 210.3 may be 500 ppm or less based on 100 parts by weight of the absorbent resin. Since the lower the content of the residual monomers, the more preferable it is, the lower limit thereof is not particularly limited, but may be, for example, 100 ppm or more.

The absorbent resin may satisfy the following (1) to (5):
(1) a Hunter Color B of 1 to 7;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 23 g/g as measured according to EDANA method WSP 242.2;
(4) a permeability of 50 to 800 seconds; and
(5) an absorption rate by a vortex method of 20 to 75 seconds.

The absorbent resin may satisfy the following (1) to (5):
(1) a Hunter Color B of 1 to 6.5;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 22 g/g as measured according to EDANA method WSP 242.2;
(4) a permeability of 50 to 750 seconds; and
(5) an absorption rate by a vortex method of 25 to 75 seconds.

The absorbent resin according to one aspect of the present invention maintains a low Hunter Color B value, thereby exhibiting excellent color stability, and significantly reduces the residual monomer (RM) content, thereby enabling the expression of stable quality and reliable absorption performance. In addition, it exhibits excellent performance in major absorption characteristics such as centrifugal retention capacity (CRC), absorbency under pressure (AUP), permeability, and absorption rate by vortex method, providing the ability to efficiently absorb and stably store liquids.

In particular, the improvement in Hunter Color B and RM simultaneously improves product appearance and quality reliability, and in combination with the improvement in permeability and absorption rate, can increase the stability of absorption performance while significantly improving overall product quality and user satisfaction.

The absorbent resin of the present invention having the above characteristics can be manufactured by optimizing the components and conditions used in the polymerization and post-crosslinking processes, and specific configurations and manufacturing methods thereof will be described in detail below.

### 2. Method for manufacturing absorbent resin

Another aspect of the present invention provides a method for manufacturing an absorbent resin, the method comprising:
(S1) a polymerization step comprising mixing a water-soluble ethylenically unsaturated monomer having an acidic group, at least a portion of which is neutralized, with a thermal initiator and a color improver, to obtain a polymer; and
(S2) a post-crosslinking step comprising mixing the polymer obtained in the polymerization step with a surface crosslinking agent and a discoloration inhibitor, and the absorbent resin satisfying the following (1) to (4):
   (1) a Hunter Color B of 8 or less;
   (2) a centrifugal retention capacity (CRC) of 30 g/g or more as measured according to EDANA method WSP 241.2;
   (3) an absorbency under pressure (AUP) at 4826 Pa (0.7 psi) of 9 g/g or more as measured according to EDANA method WSP 242.2; and
   (4) a permeability of 1,000 seconds or less.

### (S1) Polymerization process

The polymerization process may be performed by mixing a water-soluble ethylenically unsaturated monomer having an acidic group, at least a portion of which is neutralized, with a thermal initiator and a color improver.

Sodium persulfate (Na₂S₂O₈) may be used as the thermal initiator. The amount of the sodium persulfate added may be 1,000 to 2,500 ppm based on 100 parts by weight of the water-soluble ethylenically unsaturated monomer. If the amount of the sodium persulfate added is less than 1,000 ppm, the removal efficiency of residual monomers decreases, and if the amount of the sodium persulfate added exceeds 2,500 ppm, a problem arises in that the color quality of the absorbent resin deteriorates. Therefore, controlling the appropriate addition amount of sodium persulfate is a key factor that significantly affects the removal of residual monomers and color quality of the absorbent resin.

Hydrogen peroxide (H₂O₂) may be used as the color improver. The amount of the hydrogen peroxide added may be 50 ppm or more to less than 500 ppm based on 100 parts by weight of the water-soluble ethylenically unsaturated monomer. Specifically, the amount of the hydrogen peroxide added may be 50 ppm or more, 60 ppm or more, 70 ppm or more, 80 ppm or more, 90 ppm or more, or 100 ppm or more, and may be less than 500 ppm, 450 ppm or less, 400 ppm or less, 350 ppm or less, 300 ppm or less, 250 ppm or less, 200 ppm or less, or 150 ppm or less, based on 100 parts by weight of the water-soluble ethylenically unsaturated monomer. For example, the amount of the hydrogen peroxide added may be 50 ppm or more to less than 500 ppm, 50 ppm to 450 ppm, 60 ppm to 400 ppm, 70 ppm to 350 ppm, 80 ppm to 300 ppm, 90 ppm to 250 ppm, 100 ppm to 200 ppm, or 100 ppm to 150 ppm. If the amount of the hydrogen peroxide added is less than 50 ppm, the color quality of the absorbent resin deteriorates, and if the amount of the hydrogen peroxide added is 500 ppm or more, the content of residual monomers may significantly increase. Therefore, controlling the appropriate addition amount of hydrogen peroxide also plays an important role in balancing the removal of residual monomers and the color quality of the absorbent resin.

The polymerization process may include (S1-1) polymerizing a water-soluble ethylenically unsaturated monomer having an acidic group, at least a portion of which is neutralized, in the presence of a crosslinking agent, a chelating agent, a thermal initiator, a color improver, and other additives to form a hydrogel polymer, and (S1-2) drying, pulverizing, and classifying the hydrogel polymer to form a base resin.

The water-soluble ethylenically unsaturated monomer may be any monomer commonly used in the production of absorbent resins. For example, the water-soluble ethylenically unsaturated monomer may be a compound represented by the following Chemical Formula 1:

[Chemical Formula 1] R1 -COOM¹

In Chemical Formula 1,
R1 is an alkyl group having 2 to 5 carbon atoms containing an unsaturated bond, and
M1 is a hydrogen atom, a monovalent or divalent metal, an ammonium group, or an organic amine base.

The monomer may include at least one selected from the group consisting of (meth)acrylic acid, and monovalent alkali metal salts, divalent metal salts, ammonium salts, and organic amine salts of these acids, maleic anhydride, fumaric acid, crotonic acid, itaconic acid, 2-acryloylethanesulfonic acid, 2-methacryloylethanesulfonic acid, 2-(meth)acryloylpropanesulfonic acid or 2-(meth)acrylamide-2-methylpropanesulfonic acid, (meth)acrylamide, N-substituted (meth)acrylates, 2-hydroxyethyl (meth)acrylate, 2-hydroxypropyl (meth)acrylate, methoxypolyethylene glycol (meth)acrylate, polyethylene glycol (meth)acrylate, (N,N)-dimethylaminoethyl (meth)acrylate, and (N,N)-dimethylaminopropyl (meth)acrylamide, but is not limited thereto. The concentration of the water-soluble ethylenically unsaturated monomer in the monomer composition may be appropriately adjusted in consideration of polymerization time and reaction conditions, and may preferably be 20 to 90% by weight, or 40 to 65% by weight. This concentration range may be advantageous for controlling pulverization efficiency during pulverization of the polymer to be described later, while eliminating the need to remove unreacted monomers after polymerization by utilizing a gel effect phenomenon occurring in the polymerization reaction of a high-concentration aqueous solution. However, if the concentration of the monomer becomes excessively low, the yield of the absorbent resin may decrease. Conversely, if the concentration of the monomer becomes excessively high, process problems may occur, such as precipitation of a part of the monomer or a decrease in pulverization efficiency during pulverization of the polymerized hydrogel polymer, and the physical properties of the absorbent resin may deteriorate.

As the crosslinking agent (also referred to as an internal crosslinking agent to distinguish it from a surface crosslinking agent for crosslinking the surface of the absorbent resin), any compound may be used as long as it allows the introduction of crosslinks during polymerization of the water-soluble ethylenically unsaturated monomer. For example, the crosslinking agent may include at least one selected from the group consisting of N,N'-methylenebisacrylamide, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate, but is not limited thereto. The amount of the crosslinking agent added may be 500 to 1,500 ppm based on 100 parts by weight of the water-soluble ethylenically unsaturated monomer. If the amount of the crosslinking agent added is less than 500 ppm, crosslinking may not occur sufficiently, making it difficult to achieve strength above an appropriate level. If the amount of the crosslinking agent added exceeds 1500 ppm, there is a concern that the properties of the absorbent resin may deteriorate due to excessive crosslinking.

The chelating agent may include at least one selected from the group consisting of ethylenediaminetetraacetic acid (EDTA), diethylenetriaminepentaacetic acid (DTPA), phenolic acid, citric acid, amino acids, and salts thereof, but is not limited thereto. The amount of the chelating agent added may be 100 ppm or more to 15,000 ppm or less based on 100 parts by weight of the water-soluble ethylenically unsaturated monomer. If the amount of the chelating agent added exceeds 15,000 ppm, the content of residual monomers in the absorbent resin may increase, which may degrade the physical properties and absorption performance of the absorbent resin.

The other additives may include at least one selected from the group consisting of a neutralizing agent, a foam stabilizer, a thickener, a plasticizer, a storage stabilizer, and an antioxidant, but are not limited thereto.

As the neutralizing agent, a basic substance capable of neutralizing acidic groups in the water-soluble ethylenically unsaturated monomer may be used. For example, the basic substance may include at least one selected from the group consisting of sodium hydroxide (or caustic soda), potassium hydroxide, and ammonium hydroxide, but is not limited thereto.

The foam stabilizer may include at least one selected from the group consisting of sodium dodecyl sulfate, calcium stearate, oleth carboxylic acid, sodium dodecanoate, and oleyl phosphate, but is not limited thereto.

The thickener may include at least one selected from the group consisting of hydroxyethyl cellulose, hydroxypropyl cellulose, methyl cellulose, carboxymethyl cellulose, polyacrylic acid, polyacrylic acid (partial) neutralization product, polyethylene glycol, polyacrylamide, polyethyleneimine, dextrin, sodium alginate, polyvinyl alcohol, polyvinylpyrrolidone, and polyethylene oxide, but is not limited thereto.

The monomer composition may be prepared in the form of a solution dissolved in a solvent. For example, the solvent may include at least one selected from the group consisting of water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate, and N,N-dimethylacetamide, but is not limited thereto.

### (S2) Post-crosslinking process

The post-crosslinking process may be performed by mixing the polymer obtained in the polymerization process with a surface crosslinking agent and a discoloration inhibitor.

An epoxy-based surface crosslinking agent may be used as the surface crosslinking agent. For example, the epoxy-based surface crosslinking agent may include at least one selected from the group consisting of ethylene glycol diglycidyl ether, polyethylene glycol diglycidyl ether, glycerol polyglycidyl ether, propylene glycol diglycidyl ether, polypropylene glycol diglycidyl ether, 1,4-butanediol diglycidyl ether, 1,4-cyclohexanedimethanol diglycidyl ether, hexahydrophthalic anhydride diglycidyl ether, neopentyl glycol diglycidyl ether, bisphenol A diglycidyl ether, and N,N-diglycidylaniline, but is not limited thereto. When the epoxy-based surface crosslinking agent is used, the absorbency under pressure (AUP) and permeability of the absorbent resin tend to improve. On the other hand, when a non-epoxy-based surface crosslinking agent is used, the AUP may be relatively low, and the permeability may tend to be slow. Therefore, by applying an epoxy-based surface crosslinking agent, the performance of the absorbent resin can be more efficiently improved.

The amount of the surface crosslinking agent added may be 0.01 parts by weight or more to 0.30 parts by weight or less, 0.01 parts by weight or more to 0.20 parts by weight or less, or 0.01 parts by weight or more to 0.15 parts by weight or less, based on 100 parts by weight of the polymer. If the amount of the surface crosslinking agent added exceeds 0.30 parts by weight based on 100 parts by weight of the polymer, there is a concern that the physical properties of the absorbent resin may deteriorate due to excessive surface crosslinking.

The discoloration inhibitor may include at least one selected from the group consisting of disodium alpha-sulfoglycolate, lauryl phosphonic acid, stearyl phosphonic acid, and a disodium salt of 2-hydroxy-2-sulfonatoacetic acid, but is not limited thereto. The amount of the discoloration inhibitor added may be 0.01 parts by weight or more to less than 0.10 parts by weight, 0.01 parts by weight or more to 0.07 parts by weight or less, 0.01 parts by weight or more to 0.05 parts by weight or less, or 0.01 parts by weight or more to 0.03 parts by weight or less, based on 100 parts by weight of the polymer. If the amount of the discoloration inhibitor added is 0.10 parts by weight or more based on 100 parts by weight of the polymer, the absorbency under pressure (AUP) and permeability of the absorbent resin may decrease, thereby deteriorating absorption characteristics.

The post-crosslinking process may be performed at a temperature of 150°C or lower. Specifically, the post-crosslinking process may be performed at a temperature of 150°C or lower, 145°C or lower, 140°C or lower, 135°C or lower, or 130°C or lower. For example, the post-crosslinking process may be performed at a temperature of 110 to 150°C, 110 to 145°C, 110 to 140°C, 110 to 135°C, or 110 to 130°C. The post-crosslinking process may be performed for a time of 10 minutes or more to less than 60 minutes. Specifically, the post-crosslinking process may be performed for 10 minutes or more to less than 60 minutes, 10 minutes to 55 minutes, 10 minutes to 50 minutes, 10 minutes to 45 minutes, 10 minutes to 40 minutes, 10 minutes to 35 minutes, or 10 minutes to 30 minutes. Since the post-crosslinking process of the present invention is performed in a short time under the temperature and time conditions defined above, it has the advantage of suppressing thermal degradation and discoloration and improving process reproducibility and product uniformity compared to a long-term high-temperature heating process.

The other additives may include at least one selected from the group consisting of a reducing agent, an inorganic filler, and a thickener, but are not limited thereto.

The reducing agent may include at least one selected from the group consisting of sodium bisulfite, sodium metabisulfite (Na2S2O5), sodium hydrosulfite, sodium thiosulfate, and sodium formaldehyde sulfoxylate, but is not limited thereto.

The inorganic filler may include at least one selected from the group consisting of silica, clay, alumina, silica-alumina composite, titania, zinc oxide, and silicate, but is not limited thereto.

As the thickener, a polysaccharide, a hydroxy-containing polymer, or a combination thereof may be used. For example, the thickener may include at least one selected from the group consisting of xanthan gum, arabic gum, karaya gum, tragacanth gum, ghatti gum, guar gum, locust bean gum, psyllium seed gum, hydroxypropylmethylcellulose, carboxymethylcellulose, methylcellulose, hydroxymethylcellulose, hydroxyethylcellulose, hydroxypropylcellulose, hydroxyethylmethylcellulose, hydroxymethylpropylcellulose, hydroxyethylhydroxypropylcellulose, ethylhydroxyethylcellulose, and methylhydroxypropylcellulose, but is not limited thereto.

The absorbent resin manufactured by the above manufacturing method may satisfy the following (1) to (5):
(1) a Hunter Color B of 8 or less;
(2) a centrifugal retention capacity (CRC) of 30 g/g or more as measured according to EDANA method WSP 241.2;
(3) an absorbency under pressure (AUP) at 4826 Pa (0.7 psi) of 9 g/g or more as measured according to EDANA method WSP 242.2;
(4) a permeability of 1,000 seconds or less; and
(5) an absorption rate by a vortex method of 80 seconds or less.

The absorbent resin manufactured by the above manufacturing method may satisfy the following (1) to (5):
(1) a Hunter Color B of 1 to 7;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 23 g/g as measured according to EDANA method WSP 242.2;
(4) a permeability of 50 to 800 seconds; and
(5) an absorption rate by a vortex method of 20 to 75 seconds.

The absorbent resin manufactured by the above manufacturing method may satisfy the following (1) to (5):
(1) a Hunter Color B of 1 to 6.5;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 22 g/g as measured according to EDANA method WSP 242.2;
(4) a permeability of 50 to 750 seconds; and
(5) an absorption rate by a vortex method of 25 to 75 seconds.

The absorbent resin manufactured by the manufacturing method according to one aspect of the present invention stably maintains Hunter Color, thereby providing excellent appearance quality of the product and enhancing consumer preference. In addition, it has excellent centrifugal retention capacity to stably retain a large amount of moisture, and also has excellent absorbency under pressure, allowing it to exhibit stable absorption performance even under pressure conditions. Furthermore, permeability is appropriately secured so that liquid can be quickly and uniformly absorbed and dispersed, and the absorption rate is also fast, providing rapid absorption responsiveness during use.

Further, the absorbent resin manufactured by the manufacturing method according to one aspect of the present invention can minimize leakage or discomfort during product use due to the excellent absorption characteristics described above, and exhibits stable absorption power and shape retention ability even during long-term use, thereby improving the reliability and satisfaction of sanitary products. Also, these characteristics are expected to contribute to reducing quality deviations during the manufacturing process and ensuring consistent performance of the final product.

Hereinafter, various examples are presented to assist in understanding the present invention. The following examples are provided to facilitate understanding of the present invention, but the scope of protection of the present invention is not limited thereto.

### <Example>

### Example 1

A monomer composition was prepared by mixing 100 g of acrylic acid, 1,000 ppm of an internal crosslinking agent EJ1030 (ethylene glycol diglycidyl ether ), 300 ppm of a chelating agent DTPA (diethylenetriamine pentaacetic acid), 1,800 ppm of a thermal initiator sodium persulfate (SPS), 100 ppm of a color improver (hydrogen peroxide, H₂O₂), and a 22% aqueous sodium hydroxide solution. The monomer composition was placed in a stainless steel container having a width of 250 mm, a length of 250 mm, and a height of 30 mm, and subjected to a crosslinking polymerization reaction by irradiating ultraviolet rays for 60 seconds in a UV chamber at 80°C (irradiation dose: 10 mV/cm²), followed by aging for 2 minutes to obtain a crosslinked polymer. The obtained crosslinked polymer was cut into a size of approximately 5 cm × 5 cm, and then put into a chopper and chopped to obtain a hydrogel polymer. The obtained hydrogel polymer was dried in a hot air oven at 185°C for 35 minutes, pulverized, and then classified with a standard ASTM sieve to obtain a base resin powder having a particle size of 150 to 850 µm (CRC of Base Resin 35~60 g/g, 1hr E/C <=20%).

A surface crosslinking solution was prepared by putting 3.6 g of water, 3.8 g of methanol, 0.08 g of an epoxy-based surface crosslinking agent, and as other additives, 0.15 g of aluminum sulfate (Al-S), 0.01 g of an inorganic filler (Aerosil200^{™}, manufactured by Evonic Degussa Corporation), 0.05 g of a reducing agent (SMBS^{™}, manufactured by Sigma Aldrich), and 0.03 g of a discoloration inhibitor (blancolen^{™} HP, manufactured by Bruggemann Chemical) into a mixer, and then mixing them at 200 rpm for 30 seconds.

After mixing the surface crosslinking solution based on 100 parts by weight of the prepared base resin, a surface crosslinking reaction was performed at 130°C for 20 minutes. After completion of the surface treatment, an absorbent resin having an average particle size of 150 to 850 µm was obtained using a sieve.

### Examples 2 to 4, and Comparative Examples 1 to 8

Absorbent resins were manufactured in the same manner as in Example 1, except that the compositions and conditions described in Table 1 below were used.

**[Table 1]**

| Classification | Polymerization | | | Post-crosslinking | | |
|---|---|---|---|---|---|---|
| | Internal Crosslinking Agent (ppm) | SPS (ppm) | H₂O₂ (ppm) | Surface Crosslinking Agent | Surface Crosslinking Temperature (°C) | Discoloration Inhibitor (g) |
| Example 1 | 1000 | 1800 | 100 | Epoxy | 130 | 0.03 |
| Example 2 | 1000 | 1500 | 150 | Epoxy | 130 | 0.03 |
| Example 3 | 600 | 2000 | 150 | Epoxy | 130 | 0.03 |
| Example 4 | 1400 | 2000 | 150 | Epoxy | 130 | 0.03 |
| Comparative Example 1 | 1000 | 1500 | - | Epoxy | 130 | 0.03 |
| Comparative Example 2 | 1000 | 1500 | 150 | Epoxy | 180 | 0.03 |
| Comparative Example 3 | 1000 | 1500 | 150 | Non-epoxy | 180 | 0.03 |
| Comparative Example 4 | 1000 | 1500 | 150 | Non-epoxy | 130 | 0.03 |
| Comparative Example 5 | 1000 | 1500 | 150 | Epoxy | 130 | 0.3 |
| Comparative Example 6 | 600 | 2000 | - | Epoxy | 130 | 0.03 |
| Comparative Example 7 | 1400 | 2000 | - | Epoxy | 130 | 0.03 |
| Comparative Example 8 | 1000 | 1500 | 500 | Epoxy | 130 | 0.03 |

The terms listed in Table 1 above are as follows:
Epoxy-based: Ethylene Glycol Diglycidyl Ether (EJ1030S^{™}, manufactured by Junsei)
Non-epoxy-based: Ethylene carbonate (manufactured by Sigma Aldrich)
Discoloration inhibitor: B-HP (blancolen^{™} HP, manufactured by Bruggemann Chemical)

### <Experimental Example>

The physical properties of the absorbent resins prepared in the Examples and Comparative Examples were evaluated by the following methods, and the results are shown in the table below. Unless otherwise specified, the following physical property evaluations were conducted at a temperature of 23±2°C and a relative humidity of 50±5%, and physiological saline or saline refers to a 0.9 wt% aqueous sodium chloride (NaCl) solution.

### 1. Hunter Color B

The b value was measured using a colorimeter (Color Quest II, Hunter Lab Co.). L, a, and b measured by the colorimeter represent values of coordinate axes indicating unique colors, respectively. L represents whiteness (brightness), and may have a value from 0 to 100. The closer the L value is to 0, the blacker it appears, and the closer it is to 100, the whiter it appears. A may have a positive or negative value based on 0; a value larger than 0 indicates a redder color, while a value smaller than 0 indicates a greener color. B may have a positive or negative value based on 0; a value larger than 0 indicates a yellower color, while a value smaller than 0 indicates a bluer color.

### 2. Centrifugal Retention Capacity (CRC)

Centrifugal retention capacity (CRC) by absorption capacity under no load was measured according to the EDANA WSP 241.2 standard of the European Disposables and Nonwovens Association (EDANA). Absorbent resin WO (g, about 0.2 g) was uniformly placed in a non-woven fabric bag and sealed, then immersed in 0.9% by weight sodium chloride aqueous solution (physiological saline) at room temperature. After 30 minutes, the bag was drained for 3 minutes at 250 G using a centrifuge, and then the mass W2 (g) of the bag was measured. In addition, the mass W1 (g) at that time was measured after performing the same operation without using the absorbent resin. Using each mass thus obtained, CRC (g/g) was calculated according to the following Equation 1 to confirm retention capacity. [Equation 1] $CRC \left(g/g\right) = \left\{\left[W2\left(g\right)-W1\left(g\right)-W0\left(g\right)\right]/W0\left(g\right)\right\}$

### 3. Absorbency Under Pressure (AUP)

The absorbency under pressure of 0.7 psi for each resin was measured according to the method of EDANA WSP 242.2 standard of the European Disposables and Nonwovens Association. First, a 400 mesh stainless steel wire mesh was attached to the bottom of a plastic cylinder having an inner diameter of 60 mm. Under conditions of a temperature of 23±2°C and a relative humidity of 45%, the resin WO (g, 0.90 g) obtained in Examples and Comparative Examples was uniformly spread on the wire mesh, and a piston capable of uniformly applying a load of 4.82 kPa (0.7 psi) thereon was placed. The piston had an outer diameter slightly smaller than 60 mm so that there was no gap with the inner wall of the cylinder and up-and-down movement was not impeded. At this time, the weight W3 (g) of the device was measured. A glass filter having a diameter of 125 mm and a thickness of 5 mm was placed inside a Petri dish having a diameter of 150 mm, and physiological saline composed of 0.90% by weight sodium chloride was added to be at the same level as the upper surface of the glass filter. The measuring device was placed on the glass filter, and the liquid was absorbed under load for 1 hour. After 1 hour, the measuring device was lifted, and its weight W4 (g) was measured. Using each mass thus obtained, AUP (g/g) was calculated according to the following Equation 2 to confirm the absorbency under pressure. [Equation 2] $AUP \left(g/g\right) = \left[W4\left(g\right)-W3\left(g\right)\right] / W 0 \left(g\right)$

### 4. Absorption rate by Vortex method (Vortex time)

The absorption rate was measured in seconds according to the method described in International Publication No. 1987-003208. Specifically, 50 mL of physiological saline (0.9% by weight sodium chloride aqueous solution) at 23 to 24°C and a magnetic bar (diameter 8 mm, length 30 mm) were placed in a 100 ml beaker and stirred at 600 rpm. 2.0 g of the absorbent resin was added to the stirring physiological saline, and the time until the vortex disappeared was measured in seconds to calculate the absorption rate.

### 5. Permeability

Lines were marked on the liquid levels of 20 ml and 40 ml with the piston inserted into a chromatography tube (F20 mm). Thereafter, water was introduced in reverse to prevent bubbles from generating between the glass filter at the bottom of the chromatography tube and the cock to fill about 10 ml, washed 2 to 3 times with saline, and filled with 0.9% saline up to 40 ml or more. A piston was put into the chromatography tube, the lower valve was opened, and the time (B) required for the liquid level to decrease from the 40 ml to 20 ml mark was recorded. After leaving 10 ml of saline in the chromatography tube, 0.2 ± 0.0005 g of the classified (300 to 600 µm) absorbent resin sample was added, and saline was added to make the saline volume 50 ml, followed by leaving it for 30 minutes. Then, a piston with a weight (0.3 psi = 106.26 g) was placed in the chromatography tube and left for 1 minute. The valve at the bottom of the chromatography tube was opened, and the time (T1) required for the liquid level to decrease from the 40 ml to 20 ml mark was recorded to calculate the time of T1 - B (unit: seconds).

### 6. Residual Monomers (RM, ppm)

The residual monomer content was measured according to the EDANA WSP 210.3 method. Specifically, 1.000 g of an absorbent resin powder sample having a particle size of 150 to 850 µm and 200 g of a 0.90% by weight sodium chloride aqueous solution were placed in a 250 ml plastic container with a lid and stirred for 1 hour to extract unreacted acrylic acid. The extracted solution was analyzed using HPLC/CAD under the following conditions, and the content of unreacted acrylic acid, which is a residual monomer, was measured (based on the total weight of the absorbent resin, ppm).

### <Analysis Conditions>

### Mobile Phase

Mobile Phase A: 1000 mL of acetonitrile was filtered through a solvent clarification system to remove foreign substances.

Mobile Phase B: 1000 mL of ultrapure water was filtered through a solvent clarification system to remove foreign substances.
HPLC Analysis Conditions
Column: Capcellpak C18 (4.6 mm I.D. × 50 mm L., 3 *µm*, Shiseido)
Eluent: Mobile Phase A/Mobile Phase B = 75/25 (v/v, %)
Flow rate: 1mL/min
Column temp.: 40 °C
Run time: 15 min
Injection Volume: 10 µl
CAD Analysis Conditions
Gas pressure = 232,353 Pa (33.7 psi), Corona = normal
Total flow = 1.14 mL/min, Flow ratio = 0.48
The range was measured at 100 pA and then adjusted according to the content.
(The peak size increases as it goes from 100 pA -> 50 pA -> 20 pA.)

**[Table 2]**

| | Hunter Color B (Color) | CRC (g/g) | 0.7 AUP (g/g) | Vortex (s) | Permeability (s) | RM (ppm) |
|---|---|---|---|---|---|---|
| Example 1 | 4.8 | 37.9 | 21.7 | 69 | 98 | 488 |
| Example 2 | 4.7 | 37.7 | 20 | 64 | 101 | 380 |
| Example 3 | 6.0 | 45 | 9.5 | 30 | 700 | 491 |
| Example 4 | 6.2 | 30.5 | 19 | 30 | 145 | 488 |
| Comparative Example 1 | 8.4 | 37.8 | 19 | 68 | 96 | 519 |
| Comparative Example 2 | 8.9 | 38 | 18.7 | 69 | 100 | 590 |
| Comparative Example 3 | 9.1 | 38.1 | 23.1 | 75 | 85 | 520 |
| Comparative Example 4 | 5.4 | 38.1 | 8.5 | 63 | 1012 | 519 |
| Comparative Example 5 | 3.6 | 38.2 | 15 | 67 | 1001 | 499 |
| Comparative Example 6 | 9.8 | 45.1 | 9.3 | 31 | 699 | 477 |
| Comparative Example 7 | 10.2 | 30.7 | 18.7 | 29 | 180 | 478 |
| Comparative Example 8 | 2.9 | 38.5 | 20.5 | 65 | 100 | 1000 |

According to Table 2, it was confirmed that the absorbent resins according to Examples 1 to 4 of the present invention exhibited excellent characteristics, such as a centrifugal retention capacity of 30 g/g or more, an absorbency under pressure of 9 g/g or more, an absorption rate of 80 seconds or less, and a permeability of 1,000 seconds or less, while having a Hunter Color B of 8 or less and a residual monomer content of 500 ppm or less. On the other hand, Comparative Examples 1, 6, and 7, in which hydrogen peroxide was not added in the polymerization step, showed an increase in Hunter Color B to 8.4, 9.8, and 10.2, respectively, and Comparative Example 8, in which 500 ppm or more of hydrogen peroxide was added, showed an increase in the content of residual monomers by about twice or more compared to the Examples.

In Comparative Example 2, where surface crosslinking was performed at 180°C in the post-crosslinking step, Hunter Color B significantly increased to 8.9; and in Comparative Example 3, where surface crosslinking was performed at 180°C using a non-epoxy-based surface crosslinking agent, Hunter Color B further increased to 9.1, showing significant discoloration compared to Examples 1 and 2.

Meanwhile, in Comparative Example 4 using a non-epoxy-based surface crosslinking agent in the post-crosslinking step and Comparative Example 5 using 0.1 parts by weight or more of a discoloration inhibitor, Hunter Color B was maintained at 8 or less, but absorbency under pressure was significantly reduced compared to Example 2, and permeability was confirmed to be significantly increased.

Therefore, it was confirmed that the absorbent resins according to Examples 1 to 4 of the present invention exhibit excellent and balanced properties including Hunter Color, centrifugal retention capacity, absorbency under pressure, absorption rate, and permeability, and secure safety and stability due to low residual monomer content. In particular, by applying optimized polymerization and post-crosslinking conditions, discoloration and performance degradation can be minimized, and various effects that consumers can perceive, such as leakage prevention during use, rapid liquid absorption, and shape stability during long-term use, can also be expected. In conclusion, the absorbent resin of the present invention is remarkably superior in terms of appearance quality, absorption performance, safety, and convenience of use, and can exhibit excellent effects as a sanitary product.

While specific parts of the present invention have been described in detail above, it will be apparent to those skilled in the art that these specific descriptions are merely preferred embodiments, and the scope of the present invention is not limited thereto. Therefore, the substantial scope of the present invention is defined by the appended claims and their equivalents.

## Claims

1. An absorbent resin satisfying the following (1) to (4):
(1) a Hunter Color B of 8 or less;
(2) a centrifugal retention capacity (CRC) of 30 g/g or more as measured according to EDANA method WSP 241.2;
(3) an absorbency under pressure (AUP) at 4826 Pa (0.7 psi) of 9 g/g or more as measured according to EDANA method WSP 242.2;
(4) a permeability of 1,000 seconds or less.

2. The absorbent resin of claim 1, wherein
an absorption rate of the absorbent resin by a vortex method is 80 seconds or less, and wherein the absorption rate by the vortex method is calculated by adding 2 g of the absorbent resin to 50 mL of physiological saline at 23°C to 24°C, stirring at 600 rpm, and measuring a time in seconds until a vortex disappears.

3. The absorbent resin of claim 1,
wherein the absorbent resin satisfies the following (1) to (5):
(1) a Hunter Color B of 1 to 7;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 23 g/g as measured according to EDANA method WSP 242.2;
(4) a permeability of 50 to 800 seconds; and
(5) an absorption rate by a vortex method of 20 to 75 seconds.

4. The absorbent resin of claim 1,
wherein the absorbent resin satisfies the following (1) to (5):
(1) a Hunter Color B of 1 to 6.5;
(2) a centrifugal retention capacity (CRC) of 30 to 45 g/g as measured according to EDANA method WSP 241.2;
(3) an absorbency under pressure (AUP) at 4826 Pa (0.7 psi) of 9 to 22 g/g as measured according to EDANA method WSP 242.2;
(4) a permeability of 50 to 750 seconds; and
(5) an absorption rate by a vortex method of 25 to 75 seconds.

5. A method for manufacturing an absorbent resin, the method comprising:
(S1) a polymerization step comprising mixing a water-soluble ethylenically unsaturated monomer having an acidic group, at least a portion of which is neutralized, with sodium persulfate and hydrogen peroxide (H₂O₂), to obtain a polymer; and
(S2) a post-crosslinking step comprising mixing the polymer obtained in the polymerization step with an epoxy-based surface crosslinking agent and a discoloration inhibitor,
wherein the absorbent resin satisfies the following:
(1) a Hunter Color B of 8 or less;
(2) a centrifugal retention capacity (CRC) of 30 g/g or more, as measured according to EDANA method WSP 241.2;
(3) an absorbency under pressure (AUP) at 4,826 Pa (0.7 psi) of 9 g/g or more, as measured according to EDANA method WSP 242.2; and
(4) a permeability of 1,000 seconds or less.

6. The method of claim 5, wherein
an amount of the sodium persulfate added in the step (S1) is 1,000 to 2,500 ppm based on 100 parts by weight of the water-soluble ethylenically unsaturated monomer.

7. The method of claim 5, wherein
an amount of the hydrogen peroxide added in the step (S1) is 100 ppm or more to less than 500 ppm based on 100 parts by weight of the water-soluble ethylenically unsaturated monomer.

8. The method of claim 5, wherein
an amount of the surface crosslinking agent added in the step (S2) is 0.01 to 0.30 parts by weight based on 100 parts by weight of the polymer obtained in the step (S1).

9. The method of claim 5, wherein
an amount of the discoloration inhibitor added in the step (S1) is 0.01 parts by weight or more to less than 0.10 parts by weight based on 100 parts by weight of the polymer obtained in the step (S1).

10. The method of claim 5, wherein
the post-crosslinking process in the step (S2) is performed at a temperature of 150°C or lower.
